# EUROPEAN PATENT SPECIFICATION

(11) **EP 3 808 571 B1**
(45) Date of publication and mention of the grant of the patent: **04.06.2025**
(21) Application number: 20196122.4
(22) Date of filing: 15.09.2020
(51) Int. Cl.: B60C 1/00, C08L 9/06, C08K 3/36, C08L 45/00, C08L 9/00, C08L 21/00

(54) **TIRE COMPOSITION AND TIRE**
REIFENZUSAMMENSETZUNG UND REIFEN
COMPOSITION DE PNEU ET PNEU

(30) Priority: 15.10.2019 JP 2019188538
(43) Date of publication of application: 21.04.2021
(73) Proprietor: Sumitomo Rubber Industries, Ltd., Kobe-shi, Hyogo 651-0072 (JP)
(72) Inventor: MATSUI, Ryoji, Kobe-shi, Hyogo 651-0072 (JP); ISHINO, Soh, Kobe-shi, Hyogo 651-0072 (JP)
(74) Representative: TBK

(56) References cited:
- EP-A1- 2 763 829
- EP-B1- 2 763 829
- WO-A1-2018/079804
- AU-B2- 613 512
- JP-A- 2014 012 768

## Description

### TECHNICAL FIELD

The present invention relates to tire compositions and tires.

### BACKGROUND ART

Various techniques have been studied to improve the chipping resistance of pneumatic tires. For example, Patent Literature 1 discloses a technique of incorporating natural rubber, silica, and cyclized rubber.

### CITATION LIST

### PATENT LITERATURE

Patent Literature 1: JP 2014-012768 A

### SUMMARY OF INVENTION

### TECHNICAL PROBLEM

As a result of extensive studies, the present inventors have found that the conventional techniques leave room for improvement in terms of chipping resistance during high speed running.

The present invention aims to solve the new problem found by the inventors and provide tire compositions which provide improved chipping resistance during high speed running, and tires including the tire compositions.

### SOLUTION TO PROBLEM

The present invention relates to a tire composition, containing:
an elastomer component;
at least one liquid plasticizer selected from the group consisting of liquid rubbers, liquid resins, and ester plasticizers; and
a dicyclopentadiene-aromatic compound copolymer resin and/or a hydrogenated dicyclopentadiene resin.

In the tire composition, a ratio of a combined amount of the dicyclopentadiene-aromatic compound copolymer resin and the hydrogenated dicyclopentadiene resin to a total amount of the at least one liquid plasticizer is 0.67 to 10, more preferably 1.1 to 1.5.

The tire composition preferably contains silica. More preferably, it contains 5 to 200 parts by mass of silica per 100 parts by mass of the total elastomer component.

The tire composition preferably contains a mercapto silane coupling agent.

In the tire composition, a ratio of a total amount of silica to a total amount of the at least one liquid plasticizer is preferably 1.0 to 30.

In the tire composition, a combined amount of the dicyclopentadiene-aromatic compound copolymer resin and the hydrogenated dicyclopentadiene resin is preferably 80 parts by mass or less per 100 parts by mass of the total elastomer component.

The tire composition is preferably for use in treads.

The tire composition is preferably for use in tires for passenger vehicles.

Another aspect of the invention relates to a tire, including a tire component including the composition.

The tire component is preferably a tread.

### ADVANTAGEOUS EFFECTS OF INVENTION

The present invention provides a tire composition containing an elastomer component, at least one liquid plasticizer selected from the group consisting of liquid rubbers, liquid resins, and ester plasticizers, and a dicyclopentadiene-aromatic compound copolymer resin and/or a hydrogenated dicyclopentadiene resin. Such a tire composition provides improved chipping resistance during high speed running.

### DESCRIPTION OF EMBODIMENTS

The tire composition of the present invention contains: an elastomer component; at least one liquid plasticizer selected from the group consisting of liquid rubbers, liquid resins, and ester plasticizers; and a dicyclopentadiene-aromatic compound copolymer resin and/or a hydrogenated dicyclopentadiene resin. Thus, the tire composition provides improved chipping resistance during high speed running.

The tire composition provides the above-mentioned advantageous effect. The reason for the advantageous effect is not exactly clear but may be explained as follows.

The studies of the inventors have revealed that dicyclopentadiene-aromatic compound copolymer resins and/or hydrogenated dicyclopentadiene resins usually have low compatibility with elastomer components. In contrast, when dicyclopentadiene-aromatic compound copolymer resins and/or hydrogenated dicyclopentadiene resins are combined with at least one liquid plasticizer selected from the group consisting of liquid rubbers, liquid resins, and ester plasticizers, the dicyclopentadiene-aromatic compound copolymer resins and/or hydrogenated dicyclopentadiene resins have improved compatibility with elastomer components so that chipping resistance during high speed running can be synergistically improved.

The chemicals which may be used in the tire composition are described below.

Non-limiting examples of the elastomer component include thermoplastic elastomers and rubber components. These may be used alone or in combinations of two or more. Rubber components are preferred among these.

Herein, the term "elastomer component" refers to an elastic polymer component that serves as a base material of a composition.

The elastomer component preferably has a weight average molecular weight (Mw) of 50,000 or more, more preferably 150,000 or more, still more preferably 350,000 or more. The upper limit of the Mw is not limited, but is preferably 4,000,000 or less, more preferably 3,000,000 or less.

Non-limiting examples of the thermoplastic elastomers include olefin thermoplastic elastomers, styrene thermoplastic elastomers, vinyl chloride thermoplastic elastomers, urethane thermoplastic elastomers, polyamide thermoplastic elastomers, polyester thermoplastic elastomers, and fluorine thermoplastic elastomers. These may be used alone or in combinations of two or more. Styrene thermoplastic elastomers are preferred among these.

The styrene thermoplastic elastomers may be any thermoplastic elastomer having a styrene unit, preferably a styrene block unit. Examples include styrene-isobutylene-styrene block copolymers (SIBS), styrene-isoprene-styrene block copolymers (SIS), styrene-isobutylene block copolymers (SIB), styrene-butadiene-styrene block copolymers (SBS), styrene-ethylene/butene-styrene block copolymers (SEBS), styrene-ethylene/propylene-styrene block copolymers (SEPS), styrene-ethylene/ethylene/propylene-styrene block copolymers (SEEPS), and styrene-butadiene/butylene-styrene block copolymers (SBBS). These may be used alone or in combinations of two or more. SIS, SBS, SEBS, and SBBS are preferred among these, with SIS or SEBS being more preferred.

Commercial thermoplastic elastomers manufactured or sold by Kaneka Corporation, Kraton Polymers, Asahi Kasei Corporation, etc. may be used.

Non-limiting examples of the rubber components include diene rubbers such as isoprene-based rubbers, polybutadiene rubber (BR), styrene-butadiene rubber (SBR), styrene-isoprene-butadiene rubber (SIBR), acrylonitrile-butadiene rubber (NBR), chloroprene rubber (CR), and butyl rubber (IIR); acrylic rubbers such as butyl acrylate rubber, ethyl acrylate rubber, and octyl acrylate rubber; nitrile rubbers; isobutylene rubbers; silicone rubbers (millable type, room temperature vulcanizable type); and fluororubbers. These rubber components may be used alone or in combinations of two or more. Among these, diene rubbers are preferred, with isoprene-based rubbers, BR, and SBR being more preferred, with BR and SBR being still more preferred.

The amount of rubber components based on 100% by mass of the total elastomer component is preferably 20% by mass or more, more preferably 50% by mass or more, still more preferably 70% by mass or more, particularly preferably 80% by mass or more, most preferably 90% by mass or more, and may be 100% by mass. When the amount is within the range indicated above, the advantageous effect tends to be better achieved.

The amount of diene rubbers based on 100% by mass of the total elastomer component is preferably 20% by mass or more, more preferably 50% by mass or more, still more preferably 70% by mass or more, particularly preferably 80% by mass or more, most preferably 90% by mass or more, and may be 100% by mass. When the amount is within the range indicated above, the advantageous effect tends to be better achieved.

Any SBR may be used. Examples include those generally used in the tire industry, such as emulsion-polymerized SBR (E-SBR) and solution-polymerized SBR (S-SBR). These may be used alone or in combinations of two or more.

The SBR preferably has a styrene content of 3% by mass or higher, more preferably 5% by mass or higher, still more preferably 10% by mass or higher, particularly preferably 15% by mass or higher, most preferably 20% by mass or higher, but preferably 60% by mass or lower, more preferably 55% by mass or lower, still more preferably 50% by mass or lower, particularly preferably 45% by mass or lower, most preferably 40% by mass or lower, still most preferably 30% by mass or lower, further most preferably 25% by mass or lower. When the styrene content is within the range indicated above, the advantageous effect tends to be more suitably achieved.

The SBR may be either an unmodified SBR or a modified SBR.

The modified SBR may be any SBR having a functional group interactive with a filler such as silica. For example, it may be a chain end-modified SBR obtained by modifying at least one chain end of SBR with a compound (modifier) having the functional group (i.e., a chain end-modified SBR terminated with the functional group); a backbone-modified SBR having the functional group in the backbone; a backbone- and chain end-modified SBR having the functional group in both the backbone and chain end (e.g., a backbone- and chain end-modified SBR in which the backbone has the functional group and at least one chain end is modified with the modifier); or a chain end-modified SBR that has been modified (coupled) with a polyfunctional compound having two or more epoxy groups in the molecule so that a hydroxyl or epoxy group is introduced. These may be used alone or in combinations of two or more.

Examples of the functional group include amino, amide, silyl, alkoxysilyl, isocyanate, imino, imidazole, urea, ether, carbonyl, oxycarbonyl, mercapto, sulfide, disulfide, sulfonyl, sulfinyl, thiocarbonyl, ammonium, imide, hydrazo, azo, diazo, carboxyl, nitrile, pyridyl, alkoxy, hydroxyl, oxy, and epoxy groups. These functional groups may be substituted. Among these, amino (preferably amino whose hydrogen atom is replaced with a C1-C6 alkyl group), alkoxy (preferably C1-C6 alkoxy), alkoxysilyl (preferably C1-C6 alkoxysilyl), and amide groups are preferred.

The SBR may be a SBR product manufactured or sold by, for example, Sumitomo Chemical Co., Ltd., JSR Corporation, Asahi Kasei Corporation, or Zeon Corporation.

The amount of SBR based on 100% by mass of the total elastomer component is preferably 20% by mass or more, more preferably 50% by mass or more, still more preferably 70% by mass or more. The upper limit is not limited but is preferably 95% by mass or less, more preferably 90% by mass or less. When the amount is within the range indicated above, the advantageous effect tends to be better achieved.

Any BR may be used. Examples include those generally used in the tire industry, such as high cis content BR (high cis BR), 1,2-syndiotactic polybutadiene crystal (SPB)-containing BR, and BR synthesized using rare earth catalysts (rare earth-catalyzed BR). These may be used alone or in combinations of two or more. Among these, high cis BR is preferred in order to more suitably achieve the advantageous effect.

The BR preferably has a cis content of 90% by mass or higher, more preferably 95% by mass or higher. The upper limit of the cis content is not limited and may be 100% by mass. However, it is preferably 98% by mass or lower. When the cis content is within the range indicated above, the advantageous effect tends to be more suitably achieved.

The BR may be either an unmodified BR or a modified BR. Examples of the modified BR include those into which the above-mentioned functional groups are introduced. Preferred embodiments of the modified BR are as described for the modified SBR.

The BR may be a commercial product of, for example, Ube Industries, Ltd., JSR Corporation, Asahi Kasei Corporation, or Zeon Corporation.

With regard to the amount of BR based on 100% by mass of the total elastomer component, the lower limit is not limited but is preferably 5% by mass or more, more preferably 10% by mass or more, while the amount is preferably 80% by mass or less, more preferably 50% by mass or less, still more preferably 30% by mass or less. When the amount is within the range indicated above, the advantageous effect tends to be more suitably achieved.

Examples of the isoprene-based rubbers include natural rubber (NR), polyisoprene rubber (IR), refined NR, modified NR, and modified IR. The NR may be one commonly used in the tire industry such as SIR20, RSS#3, or TSR20. Non-limiting examples of the IR include those commonly used in the tire industry, such as IR2200. Examples of the refined NR include deproteinized natural rubber (DPNR) and highly purified natural rubber (UPNR). Examples of the modified NR include epoxidized natural rubber (ENR), hydrogenated natural rubber (HNR), and grafted natural rubber. Examples of the modified IR include epoxidized polyisoprene rubber, hydrogenated polyisoprene rubber, and grafted polyisoprene rubber. These may be used alone or in combinations of two or more. Among these, NR is preferred.

The amount of isoprene-based rubbers based on 100% by mass of the total elastomer component is preferably 5% by mass or more, more preferably 10% by mass or more, but is preferably 40% by mass or less, more preferably 30% by mass or less.

Herein, the weight average molecular weight (Mw) and number average molecular weight (Mn) can be determined by gel permeation chromatography (GPC) (GPC-8000 series available from Tosoh Corporation, detector: differential refractometer, column: TSKGEL SUPERMULTIPORE HZ-M available from Tosoh Corporation) calibrated with polystyrene standards.

The cis content (cis-1,4-butadiene unit content) and vinyl content (1,2-butadiene unit content) can be determined by infrared absorption spectrometry. The styrene content can be determined by ¹H-NMR analysis.

The composition (elastomer composition, preferably rubber composition) contains a dicyclopentadiene-aromatic compound copolymer resin (DCPD-aromatic compound copolymer resin) and/or a hydrogenated dicyclopentadiene resin (hydrogenated DCPD resin). These may be used alone or in combinations of two or more. Among these, the composition preferably contains a dicyclopentadiene-aromatic compound copolymer resin.

Herein, the term "dicyclopentadiene-aromatic compound copolymer resin" refers to a resin produced by copolymerization of dicyclopentadiene and an aromatic compound. It may be a hydrogenated dicyclopentadiene-aromatic compound copolymer resin.

The proportions of the aromatic compound and dicyclopentadiene may be appropriately selected. The aromatic content is preferably 2% by mass or higher, more preferably 5% by mass or higher, still more preferably 8% by mass or higher, but is preferably 30% by mass or lower, more preferably 20% by mass or lower, still more preferably 12% by mass or lower. When it is within the range indicated above, the advantageous effect tends to be better achieved.

Herein, the aromatic content refers to the amount of the unit derived from the aromatic compound based on 100% by mass of the dicyclopentadiene-aromatic compound copolymer resin.

The dicyclopentadiene-aromatic compound copolymer resin preferably has a weight average molecular weight (Mw) of 200 or more, more preferably 300 or more, still more preferably 500 or more, but preferably 5000 or less, more preferably 3000 or less, still more preferably 2000 or less, particularly preferably 1500 or less, most preferably 1000 or less. When the Mw is within the range indicated above, the advantageous effect tends to be better achieved.

The aromatic compound may be any compound having an aromatic ring. Examples include phenol compounds such as phenol, alkylphenols, alkoxyphenols, and unsaturated hydrocarbon group-containing phenols; naphthol compounds such as naphthol, alkylnaphthols, alkoxynaphthols, and unsaturated hydrocarbon group-containing naphthols; styrene and styrene derivatives such as alkylstyrenes, alkoxystyrenes, and unsaturated hydrocarbon group-containing styrenes; coumarone, and indene. These may be used alone or in combinations of two or more. Among these, phenol and styrene derivatives are preferred, with styrene derivatives being more preferred, with alkylstyrenes being still more preferred, with α-methylstyrene being particularly preferred.

The number of carbon atoms of the alkyl or alkoxy groups in the above-mentioned compounds is preferably 1 to 20, more preferably 1 to 12, still more preferably 1 to 8, particularly preferably 1 to 5, most preferably 1 to 3. The number of carbon atoms of the unsaturated hydrocarbon groups in the above-mentioned compounds is preferably 2 to 20, more preferably 2 to 12, still more preferably 2 to 5.

The aromatic compounds may have one substituent or two or more substituents on the aromatic ring. In the case of an aromatic compound having two or more substituents on the aromatic ring, the substituents may be located at any of the ortho, meta, or para positions. Moreover, in the case of a styrene derivative having a substituent on the aromatic ring, the substituent may be at the ortho, meta, or para position with respect to the vinyl group of styrene.

These aromatic compounds may be used alone or in combinations of two or more.

Specific examples of the alkylphenols include methylphenol, ethylphenol, butylphenol, t-butylphenol, octylphenol, nonylphenol, decylphenol, and dinonylphenol. They may be those substituted at any of the ortho, meta, or para positions. Among these, t-butylphenol is preferred, with p-t-butylphenol being more preferred.

Specific examples of the alkylnaphthols include compounds obtained by replacing the phenol moiety of the above-mentioned alkylphenols with naphthol.

Specific examples of the alkylstyrenes include compounds obtained by replacing the phenol moiety of the above-mentioned alkylphenols with styrene.

Specific examples of the alkoxyphenols include compounds obtained by replacing the alkyl groups of the above-mentioned alkylphenols with the corresponding alkoxy groups. Also, specific examples of the alkoxynaphthols include compounds obtained by replacing the alkyl groups of the alkylnaphthols with the corresponding alkoxy groups. Also, specific examples of the alkoxystyrenes include compounds obtained by replacing the alkyl groups of the alkylstyrenes with the corresponding alkoxy groups.

Examples of the unsaturated hydrocarbon group-containing phenols include compounds which contain at least one hydroxyphenyl group per molecule and in which at least one hydrogen atom of the phenyl group is substituted with an unsaturated hydrocarbon group. The unsaturated bond in the unsaturated hydrocarbon group may be a double bond or a triple bond.

Examples of the unsaturated hydrocarbon group include C2-C10 alkenyl groups.

Specific examples of the unsaturated hydrocarbon group-containing phenols include isopropenylphenol and butenylphenol. The unsaturated hydrocarbon group-containing naphthols and the unsaturated hydrocarbon group-containing styrenes are similarly described.

Herein, the term "hydrogenated dicyclopentadiene resin" refers to a dicyclopentadiene resin which has been hydrogenated.

Herein, the term "dicyclopentadiene resin" refers to a resin containing dicyclopentadiene as a main monomer component of the backbone (main chain) of the resin, but excludes dicyclopentadiene-aromatic compound copolymer resins. The amount of the unit derived from dicyclopentadiene based on 100% by mass of the resin is 50% by mass or more, preferably 80% by mass or more, more preferably 90% by mass or more, still more preferably 95% by mass or more, particularly preferably 98% by mass or more, most preferably 100% by mass. When the amount is within the range indicated above, the advantageous effect tends to be more suitably achieved.

Examples of the dicyclopentadiene resin include petroleum resins made mainly from dicyclopentadiene produced by dimerization of cyclopentadiene extracted from the C5 fraction of petroleum.

The hydrogenation may be carried out by known methods. Exemplary suitable methods include metal-catalyzed catalytic hydrogenation, and hydrazine-based hydrogenation (e.g., JP S59-161415 A).

For example, the metal-catalyzed catalytic hydrogenation may be carried out by adding hydrogen under pressure in an organic solvent in the presence of a metal catalyst. Suitable examples of the organic solvent include tetrahydrofuran, methanol, and ethanol. These organic solvents may be used alone, or two or more of these may be used in admixture. Suitable examples of the metal catalyst include palladium, platinum, rhodium, ruthenium, and nickel. These metal catalysts may be used alone, or two or more of these may be used in admixture. The pressure to be applied is preferably, for example, 1 to 300 kgf/cm².

The hydrogenated dicyclopentadiene resin preferably has a degree of hydrogenation of double bonds (hydrogenation degree) of 20 mol% or higher, more preferably 35 mol% or higher, still more preferably 50 mol% or higher, particularly preferably 65 mol% or higher, most preferably 80 mol% or higher, even most preferably 90 mol% or higher, further most preferably 100 mol%. When the hydrogenation degree is within the range indicated above, the advantageous effect tends to be more suitably achieved.

Herein, the degree of hydrogenation (hydrogenation degree) can be calculated from the rate of decrease in the double bond signals in the ¹H-NMR spectrum. Herein, the degree of hydrogenation (hydrogenation degree) means the degree of hydrogenation of double bonds.

The dicyclopentadiene-aromatic compound copolymer resin and the hydrogenated dicyclopentadiene resin each preferably have a softening point of 60 to 200°C. The upper limit of the softening point is more preferably 160°C or lower, still more preferably 150°C or lower, while the lower limit is more preferably 80°C or higher, still more preferably 90°C or higher. When the softening point is within the range indicated above, the advantageous effect tends to be more suitably achieved.

Herein, the softening point of the resins is determined as set forth in JIS K 6220-1:2001 using a ring and ball softening point measuring apparatus and defined as the temperature at which the ball drops down.

Exemplary commercial products of the dicyclopentadiene-aromatic compound copolymer resin and the hydrogenated dicyclopentadiene resin include products of ENEOS Corporation, Maruzen Petrochemical Co., Ltd., and Exxon Mobil.

Herein, the amount of the structural units of the resins is determined by ¹H-NMR analysis.

The amount of the dicyclopentadiene-aromatic compound copolymer resin and the hydrogenated dicyclopentadiene resin (the combined amount of the dicyclopentadiene-aromatic compound copolymer resin and the hydrogenated dicyclopentadiene resin) per 100 parts by mass of the total elastomer component (preferably the total rubber component) is preferably 5 parts by mass or more, more preferably 10 parts by mass or more, still more preferably 15 parts by mass or more, but is preferably 80 parts by mass or less, more preferably 60 parts by mass or less, still more preferably 40 parts by mass or less, particularly preferably 30 parts by mass or less. When the amount is within the range indicated above, the advantageous effect tends to be better achieved.

The composition may contain a resin other than the dicyclopentadiene-aromatic compound copolymer resin and the hydrogenated dicyclopentadiene resin.

Non-limiting examples of the resin other than the dicyclopentadiene-aromatic compound copolymer resin and the hydrogenated dicyclopentadiene resin include solid styrene resins, alkylphenol resins, coumarone-indene resins, terpene resins, rosin resins, acrylic resins, and unhydrogenated dicyclopentadiene resins. These may be used alone or in combinations of two or more.

Exemplary commercial products of the resin other than the dicyclopentadiene-aromatic compound copolymer resin and the hydrogenated dicyclopentadiene resin include products of Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, Nitto Chemical Co., Ltd., Nippon Shokubai Co., Ltd., ENEOS Corporation, Arakawa Chemical Industries, Ltd., Taoka Chemical Co., Ltd., and Tokyo Chemical Industry Co., Ltd.

The composition contains at least one liquid plasticizer selected from the group consisting of liquid rubbers, liquid resins, and ester plasticizers. These may be used alone or in combinations of two or more. Liquid rubbers are preferred among these. The term "liquid plasticizer" refers to a plasticizer that is liquid at room temperature (25°C).

Preferably, the composition contains an elastomer component; a liquid rubber; and a dicyclopentadiene-aromatic compound copolymer resin and/or a hydrogenated dicyclopentadiene resin. More preferably, the composition contains an elastomer component; a liquid BR and/or a liquid SBR; and a dicyclopentadiene-aromatic compound copolymer resin and/or a hydrogenated dicyclopentadiene resin. Still more preferably, the composition contains an elastomer component; a liquid SBR; and a dicyclopentadiene-aromatic compound copolymer resin and/or a hydrogenated dicyclopentadiene resin.

Also preferably, the composition contains an elastomer component; a liquid resin; and a dicyclopentadiene-aromatic compound copolymer resin and/or a hydrogenated dicyclopentadiene resin. More preferably, the composition contains an elastomer component; a liquid coumarone-indene resin and/or a liquid acrylic resin; and a dicyclopentadiene-aromatic compound copolymer resin and/or a hydrogenated dicyclopentadiene resin. Still more preferably, the composition contains an elastomer component; a liquid coumarone-indene resin; and a dicyclopentadiene-aromatic compound copolymer resin and/or a hydrogenated dicyclopentadiene resin.

Also preferably, the composition contains an elastomer component; an ester plasticizer; and a dicyclopentadiene-aromatic compound copolymer resin and/or a hydrogenated dicyclopentadiene resin. More preferably, the composition contains an elastomer component; a sebacic acid ester and/or an adipic acid ester; and a dicyclopentadiene-aromatic compound copolymer resin and/or a hydrogenated dicyclopentadiene resin. Still more preferably, the composition contains an elastomer component; a sebacic acid ester; and a dicyclopentadiene-aromatic compound copolymer resin and/or a hydrogenated dicyclopentadiene resin.

In the preferred embodiments of the composition, the elastomer component preferably includes BR and/or SBR, preferably BR and SBR.

In the preferred embodiments of the composition, it is preferred that the amount of SBR based on 100% by mass of the total elastomer component is at least 50% by mass but not more than 90% by mass, and the amount of BR based on 100% by mass of the total elastomer component is at least 10% by mass but not more than 50% by mass.

In the preferred embodiments of the composition, the amount of the dicyclopentadiene-aromatic compound copolymer resin and the hydrogenated dicyclopentadiene resin (the combined amount of the dicyclopentadiene-aromatic compound copolymer resin and the hydrogenated dicyclopentadiene resin) per 100 parts by mass of the total elastomer component (preferably the total rubber component) is preferably 80 parts by mass or less, more preferably 60 parts by mass or less, still more preferably 40 parts by mass or less, particularly preferably 30 parts by mass or less.

Moreover, the composition in the preferred embodiments preferably contains the dicyclopentadiene-aromatic compound copolymer resin.

Liquid rubbers refer to rubber materials that are liquid at room temperature (25°C). Examples of such rubber materials include those listed for the above-mentioned rubber components. These may be used alone or in combinations of two or more. Among these, diene rubbers are preferred, with isoprene-based rubbers, BR, and SBR being more preferred, with BR and SBR being still more preferred. Also preferred are farnesene-based polymers.

The weight average molecular weight (Mw) of the liquid rubbers is preferably 3.0×10³ or more, more preferably 4.0×10³ or more, but is preferably 1.0×10⁵ or less, more preferably 1.5×10⁴ or less. When the Mw is within the range indicated above, the advantageous effect can be more suitably achieved.

As described above, preferred liquid rubbers are liquid diene rubbers (liquid diene polymers) and liquid farnesene-based polymers.

Examples of the liquid diene polymers include liquid styrene-butadiene copolymers (liquid SBR), liquid polybutadiene polymers (liquid BR), liquid polyisoprene polymers (liquid IR), and liquid styrene isoprene copolymers (liquid SIR). These may be used alone or in combinations of two or more. Among these, liquid BR and liquid SBR are preferred, with liquid SBR being more preferred, because then the advantageous effect can be more suitably achieved.

The styrene content of the liquid SBR is preferably 10% by mass or higher, more preferably 20% by mass or higher, but is preferably 55% by mass or lower, more preferably 50% by mass or lower, still more preferably 40% by mass or lower, particularly preferably 30% by mass or lower. When the styrene content is within the range indicated above, the advantageous effect can be more suitably achieved.

Liquid farnesene-based polymers refer to polymers produced by polymerizing farnesene as a monomer component. Examples include the polymers described in JP 2016-180118 A.

The liquid farnesene-based polymers may include homopolymers of farnesene (farnesene homopolymers) or copolymers of farnesene and vinyl monomers (farnesene-vinyl monomer copolymers). These may be used alone or in combinations of two or more. Suitable examples of the vinyl monomers include styrene and butadiene.

The liquid rubbers may be available from Cray Valley, Kuraray Co., Ltd., etc.

Liquid resins refer to resins that are liquid at room temperature (25°C).

Non-limiting examples of such resins include resins that are liquid at room temperature (25°C) such as styrene resins, alkylphenol resins, coumarone-indene resins, terpene resins, rosin resins, acrylic resins, unhydrogenated dicyclopentadiene resins, dicyclopentadiene-aromatic compound copolymer resins, and hydrogenated dicyclopentadiene resins. These may be used alone or in combinations of two or more. Preferred among these are liquid coumarone-indene resins and liquid acrylic resins, with liquid coumarone-indene resins being more preferred.

Liquid coumarone-indene resins refer to resins that contain coumarone and indene as main monomer components of the backbone (main chain) of the resins. Examples of monomer components other than coumarone and indene which may be present in the backbone include styrene, α-methylstyrene, methylindene, and vinyltoluene. These may be used alone or in combinations of two or more.

The combined amount of the units derived from coumarone and indene based on 100% by mass of the resins is 50% by mass or more, preferably 80% by mass or more, more preferably 90% by mass or more, still more preferably 95% by mass or more, particularly preferably 98% by mass or more, most preferably 100% by mass. When the combined amount is within the range indicated above, the advantageous effect tends to be more suitably achieved.

Liquid acrylic resins refer to resins that contain (meth)acrylates as main monomer components of the backbone (main chain) of the resins. Examples of monomer components other than (meth)acrylates which may be present in the backbone include styrene, α-methylstyrene, methylindene, and vinyltoluene. These may be used alone or in combinations of two or more.

The total amount of the units derived from (meth)acrylates based on 100% by mass of the resins is 50% by mass or more, preferably 80% by mass or more, more preferably 90% by mass or more, still more preferably 95% by mass or more, particularly preferably 98% by mass or more, most preferably 100% by mass. When the total amount is within the range indicated above, the advantageous effect tends to be more suitably achieved.

The softening point of the liquid resins is preferably -20°C or higher, more preferably -5°C or higher, still more preferably 0°C or higher, but is preferably 20°C or lower, more preferably 18°C or lower, still more preferably 17°C or lower. When the softening point is within the range indicated above, the advantageous effect tends to be more suitably achieved.

The liquid resins may be available from Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, Nitto Chemical Co., Ltd., Nippon Shokubai Co., Ltd., ENEOS Corporation, Arakawa Chemical Industries, Ltd., Taoka Chemical Co., Ltd., Toagosei Co., Ltd., etc.

The ester plasticizers may be any compound having an ester group that is liquid at room temperature (25°C). Examples include phthalic acid derivatives, long-chain fatty acid derivatives, phosphoric acid derivatives, sebacic acid derivatives, and adipic acid derivatives. These may be used alone or in combinations of two or more. Sebacic acid derivatives and adipic acid derivatives are preferred among these.

Non-limiting examples of the phthalic acid derivatives include phthalic acid esters such as di-2-ethylhexyl phthalate (DOP) and diisodecyl phthalate (DIDP). Non-limiting examples of the long-chain fatty acid derivatives include long-chain fatty acid glycerol esters. Non-limiting examples of the phosphoric acid derivatives include phosphoric acid esters such as tri(2-ethylhexyl) phosphate (TOP) and tributyl phosphate (TBP). Non-limiting examples of the sebacic acid derivatives include sebacic acid esters such as di(2-ethylhexyl) sebacate (DOS) and diisooctyl sebacate (DIOS). Non-limiting examples of the adipic acid derivatives include adipic acid esters such as di(2-ethylhexyl) adipate (DOA) and diisooctyl adipate (DIOA).

Among these, sebacic acid esters and adipic acid esters are preferred, with DOS and DOA being more preferred, with DOS being still more preferred.

The glass transition temperature (Tg) of the ester plasticizers is preferably -110°C or higher, more preferably -100°C or higher, still more preferably -80°C or higher, but is preferably -20°C or lower, more preferably - 40°C or lower, still more preferably -55°C or lower. When the Tg is within the range indicated above, the advantageous effect tends to be more suitably achieved.

Herein, the glass transition temperature is measured using a differential scanning calorimeter (Q200, TA Instruments Japan) at a temperature increase rate of 10°C/min in accordance with JIS-K7121.

The ester plasticizers may be available from Daihachi Chemical Industry Co., Ltd., Taoka Chemical Co., Ltd., etc.

The amount of the at least one liquid plasticizer (the combined amount of liquid rubbers, liquid resins, and ester plasticizers) per 100 parts by mass of the total elastomer component (preferably the total rubber component) is preferably 5 parts by mass or more, more preferably 10 parts by mass or more, but is preferably 70 parts by mass or less, more preferably 50 parts by mass or less, still more preferably 30 parts by mass or less, particularly preferably 20 parts by mass or less. When the amount is within the range indicated above, the advantageous effect tends to be better achieved.

The composition may contain a plasticizer other than the above-mentioned liquid plasticizers.

The plasticizer other than the liquid plasticizers may be an oil. Examples of the oil include process oils, vegetable oils, and mixtures thereof. Examples of the process oils include paraffinic process oils, aromatic process oils, and naphthenic process oils. Examples of the vegetable oils include castor oil, cotton seed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, and tung oil. These may be used alone or in combinations of two or more.

The oil may be a commercial product of, for example, Idemitsu Kosan Co., Ltd., Sankyo Yuka Kogyo K.K., ENEOS Corporation, Olisoy, H&R, Hokoku Corporation, Showa Shell Sekiyu K.K., or Fuji Kosan Co., Ltd.

The composition preferably contains silica.

Since the presence of a dicyclopentadiene-aromatic compound copolymer resin and/or a hydrogenated dicyclopentadiene resin tends to increase the viscosity of the composition, the silica can be subjected to more shear force during kneading, resulting in improved silica dispersion. Thus, the chipping resistance during high speed running can be more suitably improved.

Examples of the silica include dry silica (anhydrous silicic acid) and wet silica (hydrous silicic acid). Wet silica is preferred because it has a large number of silanol groups. These may be used alone or in combinations of two or more.

The silica preferably has a nitrogen adsorption specific surface area (N₂SA) of 50 m²/g or more, more preferably 80 m²/g or more, still more preferably 120 m²/g or more, particularly preferably 150 m²/g or more, but preferably 600 m²/g or less, more preferably 300 m²/g or less, still more preferably 250 m²/g or less, particularly preferably 200 m²/g or less. When the N₂SA is within the range indicated above, the advantageous effect tends to be more suitably achieved.

Herein, the N₂SA of the silica is measured by the BET method in accordance with ASTM D3037-81.

The silica may be a commercial product of, for example, Degussa, Rhodia, Tosoh Silica Corporation, Solvay Japan, or Tokuyama Corporation.

The amount of the silica per 100 parts by mass of the total elastomer component (preferably the total rubber component) is preferably 5 parts by mass or more, more preferably 10 parts by mass or more, still more preferably 40 parts by mass or more, particularly preferably 60 parts by mass or more, most preferably 70 parts by mass or more, further most preferably 80 parts by mass or more, but is preferably 200 parts by mass or less, more preferably 150 parts by mass or less, still more preferably 120 parts by mass or less, particularly preferably 100 parts by mass or less. When the amount is within the range indicated above, the advantageous effect tends to be more suitably achieved.

In the composition, the amount of the silica based on 100% by mass of the total filler (reinforcing filler) is preferably 30% by mass or more, more preferably 50% by mass or more, still more preferably 70% by mass or more, particularly preferably 90% by mass or more, and may be 100% by mass. When the amount is within the range indicated above, the advantageous effect tends to be more suitably achieved.

The rubber composition containing silica preferably further contains a silane coupling agent.

Non-limiting examples of the silane coupling agent include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyl tetrasulfide, 2-triethoxysilylethyl-N,N-dimethylthiocarbamoyl tetrasulfide, and 3-triethoxysilylpropyl methacrylate monosulfide; mercapto silane coupling agents such as 3-mercaptopropyltrimethoxysilane and 2-mercaptoethyltriethoxysilane; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. Examples of commercially available silane coupling agents include products of Degussa, Momentive, Shin-Etsu Silicone, Tokyo Chemical Industry Co., Ltd., AZmax. Co., and Dow Corning Toray Co., Ltd. These may be used alone or in combinations of two or more. Among these, sulfide silane coupling agents and mercapto silane coupling agents are preferred, with mercapto silane coupling agents being more preferred, because then the advantageous effect tends to be better achieved.

Examples of the mercapto silane coupling agents also include, in addition to mercapto group-containing compounds, compounds in which the mercapto group is protected by a protecting group (e.g., compounds represented by the formula (III) below).

Particularly suitable mercapto silane coupling agents are silane coupling agents containing linking units A and B represented by the following formulas (I) and (II), respectively, and silane coupling agents represented by the formula (III) below. Among these, silane coupling agents containing linking units A and B of formulas (I) and (II) are preferred.

The silane coupling agents containing linking units A and B of formulas (I) and (II) are described below.

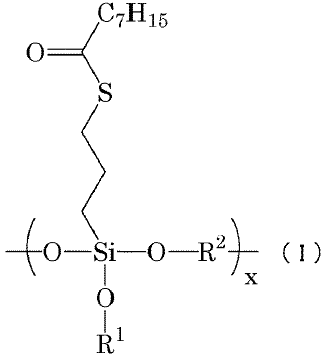

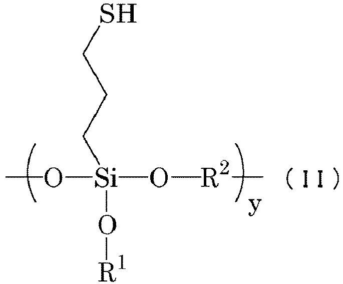

In the formulas, x represents an integer of 0 or more; y represents an integer of 1 or more; R¹ represents a hydrogen atom, a halogen atom, a branched or unbranched C1-C30 alkyl group, a branched or unbranched C2-C30 alkenyl group, a branched or unbranched C2-C30 alkynyl group, or the alkyl group in which a terminal hydrogen atom is replaced with a hydroxyl or carboxyl group; R² represents a branched or unbranched C1-C30 alkylene group, a branched or unbranched C2-C30 alkenylene group, or a branched or unbranched C2-C30 alkynylene group, provided that R¹ and R² may together form a cyclic structure.

The linking unit A content of the silane coupling agents containing linking units A and B of formulas (I) and (II) is preferably 30 mol% or higher, more preferably 50 mol% or higher, but is preferably 99 mol% or lower, more preferably 90 mol% or lower, while the linking unit B content is preferably 1 mol% or higher, more preferably 5 mol% or higher, still more preferably 10 mol% or higher, but is preferably 70 mol% or lower, more preferably 65 mol% or lower, still more preferably 55 mol% or lower. Moreover, the combined content of the linking units A and B is preferably 95 mol% or higher, more preferably 98 mol% or higher, particularly preferably 100 mol%.

The linking unit A or B content refers to the amount including the linking unit A or B present at the end of the silane coupling agent, if any. When the linking unit A or B is present at the end of the silane coupling agent, its form is not limited as long as it forms a unit corresponding to formula (I) representing the linking unit A or formula (II) representing the linking unit B.

With regard to R¹ in formulas (I) and (II), examples of the halogen atom include chlorine, bromine, and fluorine; examples of the branched or unbranched C1-C30 alkyl group include methyl and ethyl groups; examples of the branched or unbranched C2-C30 alkenyl group include vinyl and 1-propenyl groups; and examples of the branched or unbranched C2-C30 alkynyl group include ethynyl and propynyl groups.

With regard to R² in formulas (I) and (II), examples of the branched or unbranched C1-C30 alkylene group include ethylene and propylene groups; examples of the branched or unbranched C2-C30 alkenylene group include vinylene and 1-propenylene groups; and examples of the branched or unbranched C2-C30 alkynylene group include ethynylene and propynylene groups.

In the silane coupling agents containing linking units A and B of formulas (I) and (II), the total number of repetitions (x + y) consisting of the sum of the number of repetitions (x) of the linking unit A and the number of repetitions (y) of the linking unit B is preferably in the range of 3 to 300.

Examples of the silane coupling agents containing linking units A and B of formulas (I) and (II) include NXT-Z15, NXT-Z30, NXT-Z45, and NXT-Z80 all available from Momentive. These may be used alone or in combinations of two or more.

The silane coupling agents represented by the following formula (III) are described below.

(CₚH₂ₚ₊₁O)₃Si-C_{q}H_{2q}-S-CO-CₖH₂ₖ₊₁ (III)

In the formula, p represents an integer of 1 to 3, q represents an integer of 1 to 5, and k represents an integer of 5 to 12.

The symbol p represents an integer of 1 to 3, preferably of 2. When p is within the range, the advantageous effect tends to be more suitably achieved.

The symbol q represents an integer of 1 to 5, preferably of 2 to 4, more preferably of 3. When q is within the range, the advantageous effect tends to be more suitably achieved.

The symbol k represents an integer of 5 to 12, preferably of 5 to 10, more preferably of 6 to 8, still more preferably of 7. When k is within the range, the advantageous effect tends to be more suitably achieved.

Examples of the silane coupling agents of formula (III) include NXT available from Momentive. The silane coupling agents of formula (III) may be used alone or in combinations of two or more.

The amount of the silane coupling agent per 100 parts by mass of the silica is preferably 0.5 parts by mass or more, more preferably 3 parts by mass or more, still more preferably 5 parts by mass or more, but is preferably 20 parts by mass or less, more preferably 15 parts by mass or less, still more preferably 10 parts by mass or less. When the amount is within the range indicated above, the advantageous effect tends to be better achieved.

The composition may contain carbon black. In this case, the advantageous effect tends to be better achieved.

Non-limiting examples of the carbon black include N134, N110, N220, N234, N219, N339, N330, N326, N351, N550, and N762. These may be used alone or in combinations of two or more.

The carbon black preferably has a nitrogen adsorption specific surface area (N₂SA) of 30 m²/g or more, more preferably 80 m²/g or more, still more preferably 100 m²/g or more, but preferably 200 m²/g or less, more preferably 150 m²/g or less. When the N₂SA is within the range indicated above, the advantageous effect tends to be better achieved.

Herein, the N₂SA of the carbon black is measured in accordance with JIS K6217-2:2001.

The carbon black may be a commercial product of, for example, Asahi Carbon Co., Ltd., Cabot Japan K.K., Tokai Carbon Co., Ltd., Mitsubishi Chemical Corporation, Lion Corporation, NSCC Carbon Co., Ltd., or Columbia Carbon.

The amount of the carbon black per 100 parts by mass of the total elastomer component (preferably the total rubber component) is preferably 1 part by mass or more, more preferably 3 parts by mass or more, but is preferably 50 parts by mass or less, more preferably 30 parts by mass or less, still more preferably 20 parts by mass or less. When the amount is within the range indicated above, the advantageous effect tends to be better achieved.

The composition preferably contains sulfur as a crosslinking agent (vulcanizing agent).

Examples of the sulfur include those commonly used in the rubber industry, such as powdered sulfur, precipitated sulfur, colloidal sulfur, insoluble sulfur, highly dispersible sulfur, and soluble sulfur. These may be used alone or in combinations of two or more.

The sulfur may be a commercial product of, for example, Tsurumi Chemical Industry Co., Ltd., Karuizawa Sulfur Co., Ltd., Shikoku Chemicals Corporation, Flexsys, Nippon Kanryu Industry Co., Ltd., or Hosoi Chemical Industry Co., Ltd.

The amount of the sulfur per 100 parts by mass of the total elastomer component (preferably the total rubber component) is preferably 0.1 parts by mass or more, more preferably 0.5 parts by mass or more, but is preferably 5 parts by mass or less, more preferably 3 parts by mass or less. When the amount is within the range indicated above, the advantageous effect tends to be better achieved.

The composition preferably contains a vulcanization accelerator.

Examples of the vulcanization accelerator include thiazole vulcanization accelerators such as 2-mercaptobenzothiazole and di-2-benzothiazolyl disulfide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazolyl sulfenamide, N-t-butyl-2-benzothiazolyl sulfenamide, N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. These may be used alone or in combinations of two or more. Among these, sulfenamide vulcanization accelerators and guanidine vulcanization accelerators are preferred. More preferred are combinations of sulfenamide vulcanization accelerators and guanidine vulcanization accelerators.

The vulcanization accelerator may be a commercial product of, for example, Kawaguchi Chemical Industry Co., Ltd., Ouchi Shinko Chemical Industrial Co., Ltd., or Rhein Chemie.

The amount of the vulcanization accelerator per 100 parts by mass of the total elastomer component (preferably the total rubber component) is preferably 0.5 parts by mass or more, more preferably 1 part by mass or more, but is preferably 10 parts by mass or less, more preferably 5 parts by mass or less. When the amount is within the range indicated above, the advantageous effect tends to be better achieved.

The composition may contain a wax.

Non-limiting examples of the wax include petroleum waxes such as paraffin waxes and microcrystalline waxes; naturally-occurring waxes such as plant waxes and animal waxes; and synthetic waxes such as polymers of ethylene, propylene, or other similar monomers. These may be used alone or in combinations of two or more. Among these, petroleum waxes are preferred, with paraffin waxes being more preferred.

The wax may be a commercial product of, for example, Ouchi Shinko Chemical Industrial Co., Ltd., Nippon Seiro Co., Ltd., or Seiko Chemical Co., Ltd.

The amount of the wax per 100 parts by mass of the total elastomer component (preferably the total rubber component) is preferably 0.3 parts by mass or more, more preferably 0.5 parts by mass or more, but is preferably 20 parts by mass or less, more preferably 10 parts by mass or less. When the amount is within the range indicated above, the advantageous effect tends to be better achieved.

The composition may contain an antioxidant.

Examples of the antioxidant include naphthylamine antioxidants such as phenyl-α-naphthylamine; diphenylamine antioxidants such as octylated diphenylamine and 4,4'-bis(α,α'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline antioxidants such as 2,2,4-trimethyl-1,2-dihydroquinoline polymer; monophenolic antioxidants such as 2,6-di-t-butyl-4-methylphenol and styrenated phenol; and bis-, tris-, or polyphenolic antioxidants such as tetrakis[methylene-3-(3',5'-di-t-butyl-4'-hydroxyphenyl)propionate]methane. These may be used alone or in combinations of two or more. Among these, p-phenylenediamine antioxidants and quinoline antioxidants are preferred.

The antioxidant may be a commercial product of, for example, Seiko Chemical Co., Ltd., Sumitomo Chemical Co., Ltd., Ouchi Shinko Chemical Industrial Co., Ltd., or Flexsys.

The amount of the antioxidant per 100 parts by mass of the total elastomer component (preferably the total rubber component) is preferably 0.5 parts by mass or more, more preferably 1 part by mass or more, but is preferably 10 parts by mass or less, more preferably 5 parts by mass or less. When the amount is within the range indicated above, the advantageous effect tends to be better achieved.

The composition may contain stearic acid.

The stearic acid may be a conventional one, and examples include commercial products of NOF Corporation, Kao Corporation, FUJIFILM Wako Pure Chemical Corporation, and Chiba Fatty Acid Co., Ltd.

The amount of the stearic acid per 100 parts by mass of the total elastomer component (preferably the total rubber component) is preferably 0.5 parts by mass or more, more preferably 1 part by mass or more, but is preferably 10 parts by mass or less, more preferably 5 parts by mass or less. When the amount is within the range indicated above, the advantageous effect tends to be better achieved.

The composition may contain zinc oxide.

The zinc oxide may be a conventional one, and examples include commercial products of Mitsui Mining & Smelting Co., Ltd., Toho Zinc Co., Ltd., HakusuiTech Co., Ltd., Seido Chemical Industry Co., Ltd., and Sakai Chemical Industry Co., Ltd.

The amount of the zinc oxide per 100 parts by mass of the total elastomer component (preferably the total rubber component) is preferably 0.5 parts by mass or more, more preferably 1 part by mass or more, but is preferably 10 parts by mass or less, more preferably 5 parts by mass or less. When the amount is within the range indicated above, the advantageous effect tends to be better achieved.

In addition to the above components, the composition may contain additives commonly used in the tire industry, including, for example, organic peroxides, and fillers such as aluminum hydroxide, calcium carbonate, talc, alumina, clay, and mica. The amount of such additives is preferably 0.1 to 200 parts by mass per 100 parts by mass of the total elastomer component (preferably the total rubber component).

The composition may be prepared, for example, by kneading the components using a rubber kneading machine such as an open roll mill or a Banbury mixer, and then vulcanizing the kneaded mixture.

The kneading conditions are as follows. In a base kneading step of kneading additives other than vulcanizing agents and vulcanization accelerators, the kneading temperature is usually 100 to 180°C, preferably 120 to 170°C. In a final kneading step of kneading vulcanizing agents and vulcanization accelerators, the kneading temperature is usually 120°C or lower, preferably 80 to 110°C. The composition obtained after kneading vulcanizing agents and vulcanization accelerators is usually vulcanized by, for example, press vulcanization. The vulcanization temperature is usually 130 to 190°C, preferably 150 to 185°C. The vulcanization time is usually 5 to 30 minutes.

The composition may be used in tire components (i.e., as a tire composition) such as treads (cap treads), sidewalls, base treads, undertreads, clinches, bead apexes, breaker cushion rubbers, rubbers for carcass cord topping, insulations, chafers, and innerliners, and side reinforcement layers of run-flat tires. Among these, the composition is suitable for use in treads (cap treads). In the case of a tread consisting of a cap tread and a base tread, the composition can be suitably used in the cap tread.

In the composition, the ratio of the combined amount of the dicyclopentadiene-aromatic compound copolymer resin and the hydrogenated dicyclopentadiene resin to the total amount of the at least one liquid plasticizer is 0.67 to 10. The lower limit is more preferably 0.9 or higher, even most preferably 1.1 or higher, further most preferably 1.2 or higher. The upper limit is more preferably 9.0 or lower, still more preferably 7.0 or lower, particularly preferably 5.0 or lower, most preferably 3.0 or lower, even most preferably 2.0 or lower, further most preferably 1.5 or lower. When the ratio is within the range indicated above, the advantageous effect tends to be better achieved.

Herein, each amount refers to the amount per 100 parts by mass of the total elastomer component (preferably the total rubber component).

The total amount of the at least one liquid plasticizer refers to the combined amount of the liquid rubbers, liquid resins, and ester plasticizers.

The specified parameter may be achieved by appropriately adjusting the amounts of the resins and liquid plasticizers.

In the composition, the ratio of the total amount of silica to the total amount of the at least one liquid plasticizer is preferably 1.0 to 30. The lower limit is more preferably 2.0 or higher, still more preferably 3.0 or higher, particularly preferably 4.0 or higher, most preferably 5.0 or higher, even most preferably 5.5 or higher. The upper limit is more preferably 25 or lower, still more preferably 20 or lower, particularly preferably 15 or lower, most preferably 10 or lower, even most preferably 8.0 or lower, further most preferably 7.0 or lower, particularly most preferably 6.5 or lower. When the ratio is within the range indicated above, the advantageous effect tends to be better achieved.

Herein, each amount refers to the amount per 100 parts by mass of the total elastomer component (preferably the total rubber component).

The total amount of the at least one liquid plasticizer refers to the combined amount of the liquid rubbers, liquid resins, and ester plasticizers.

The specified parameter may be achieved by appropriately adjusting the amounts of silica and liquid plasticizers.

The tire of the present invention can be prepared from the composition by usual methods. Specifically, the unvulcanized composition containing additives as needed may be extruded into the shape of a tire component (in particular a tread (cap tread)) and then formed and assembled with other tire components in a usual manner in a tire building machine to build an unvulcanized tire, which may then be heated and pressurized in a vulcanizer to produce a tire.

It is sufficient that the tire component (e.g., tread) at least partially include the composition. The whole tire component may include the composition.

Non-limiting examples of the tire include pneumatic tires, solid tires, and airless tires. Pneumatic tires are preferred among these.

The tire can be suitably used as tires for passenger vehicles, large passenger vehicles, large SUVs, trucks and buses, or two-wheeled vehicles, racing tires, winter tires (e.g., studless winter tires, cold weather tires, snow tires, studded tires), all-season tires, run-flat tires, aircraft tires, or mining tires, especially as tires for passenger vehicles. The term "passenger vehicles" refers to motor vehicles used chiefly for human movement, and is the most common type of motor vehicles.

### EXAMPLES

The present invention is specifically described below with reference to, but not limited to, examples.

The chemicals used in the examples and comparative examples are listed below.
SBR: NS616 (styrene content: 21% by mass) available from Zeon Corporation
BR: BR150B (cis content: 97% by mass) available from Ube Industries, Ltd.
Thermoplastic elastomer 1: D1161 (SIS) available from Kraton Polymers
Thermoplastic elastomer 2: Tuftec P2000 (SEBS) available from Asahi Kasei Corporation
Carbon black: N220 (N₂SA: 114 m²/g) available from Mitsubishi Chemical Corporation
Silica: VN3 (N₂SA: 175 m²/g) available from Degussa
Silane coupling agent 1: NXT-Z45 (a copolymer of linking units A and B (linking unit A: 55 mol%, linking unit B: 45 mol%)) available from Momentive
Silane coupling agent 2: NXT (a silane coupling agent of formula (III) in which p = 2, q = 3, and k = 7) available from Momentive
Oil: Diana Process NH-70S (aromatic process oil) available from Idemitsu Kosan Co., Ltd.
Liquid rubber 1: Ricon 134 (liquid BR, weight average molecular weight: 8000) available from Cray Valley
Liquid rubber 2: Ricon 100 (liquid SBR, styrene content: 25% by mass, weight average molecular weight: 4500) available from Cray Valley
Liquid resin 1: NOVARES C10 (liquid coumarone-indene resin, softening point: 5 to 15°C) available from Rutgers Chemicals
Liquid resin 2: US3510 (liquid acrylic resin, Tg: - 50°C) available from Toagosei Co., Ltd.
Ester plasticizer 1: di(2-ethylhexyl) sebacate (Tg: - 65°C) available from Daihachi Chemical Industry Co., Ltd.
Ester plasticizer 2: di(2-ethylhexyl) adipate (Tg: - 70°C) available from Daihachi Chemical Industry Co., Ltd.
Resin 1 (dicyclopentadiene-aromatic compound copolymer resin): Oppera PR-383 (aromatic content: 9.6% by mass, softening point: 103°C, Mw: 770) available from Exxon Mobil
Resin 2 (hydrogenated dicyclopentadiene resin): T-REZ OP501 (hydrogenated DCPD resin, softening point: 140°C, dicyclopentadiene-derived unit content: 100% by mass) available from ENEOS Corporation
Resin 3 (unhydrogenated dicyclopentadiene resin): DCPD resin (product code: DO443, unhydrogenated DCPD resin, softening point: 140°C, dicyclopentadiene-derived unit content: 100% by mass) available from Tokyo Chemical Industry Co., Ltd.
Resin 4 (dicyclopentadiene-aromatic compound copolymer resin): Oppera PR-395 (aromatic content: 9.9% by mass, softening point: 118°C, Mw: 600) available from Exxon Mobil
Wax: Ozoace wax available from Nippon Seiro Co., Ltd.
Stearic acid: TSUBAKI available from NOF Corporation
Zinc oxide: zinc oxide #2 available from Mitsui Mining & Smelting Co., Ltd.
Antioxidant 1: NOCRAC 6C (N-(1,3-dimethylbutyl)-N'-phenyl-p-phenylenediamine (6PPD)) available from Ouchi Shinko Chemical Industrial Co., Ltd.
Antioxidant 2: NOCRAC RD (2,2,4-trimethyl-1,2-dihydroquinoline polymer) available from Ouchi Shinko Chemical Industrial Co., Ltd.
Sulfur: HK-200-5 (5% oil-containing powder sulfur) available from Hosoi Chemical Industry Co., Ltd.
Vulcanization accelerator 1: NOCCELER CZ (N-cyclohexyl-2-benzothiazolylsulfenamide) available from Ouchi Shinko Chemical Industrial Co., Ltd.
Vulcanization accelerator 2: NOCCELER D (N,N'-diphenylguanidine) available from Ouchi Shinko Chemical Industrial Co., Ltd.

### (Examples and Comparative Examples)

The chemicals other than the sulfur and vulcanization accelerators in the amounts shown in Table 1, 2, or 3 were kneaded in a Banbury mixer at 165°C for four minutes to give a kneaded mixture. Then, the kneaded mixture was kneaded with the sulfur and vulcanization accelerators in an open roll mill at 80°C for four minutes to give an unvulcanized rubber composition.

The unvulcanized rubber composition was extruded into the shape of a tread and then formed and assembled with other tire components in a tire building machine to build an unvulcanized tire. The unvulcanized tire was press-vulcanized at 150°C for 10 minutes to prepare a test tire (tire size: 205/55R16).

The test tires prepared as above were evaluated as described below. Tables 1 to 3 show the results. Comparative Example 1-1, Comparative Example 2-1, and Comparative Example 3-1 are used as standards of comparison in Table 1, Table 2, and Table 3, respectively.

### <Chipping resistance during high speed running>

Each set of test tires were mounted on a front-engine, front-wheel-drive car made in Japan. The car was driven at 80 km/h. The distance at which chipping occurred in the tire tread portion was measured. The results are expressed as an index, with the standard comparative example taken as 100. A higher index indicates a longer distance until the occurrence of chipping and thus better chipping resistance during high speed running.

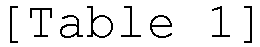

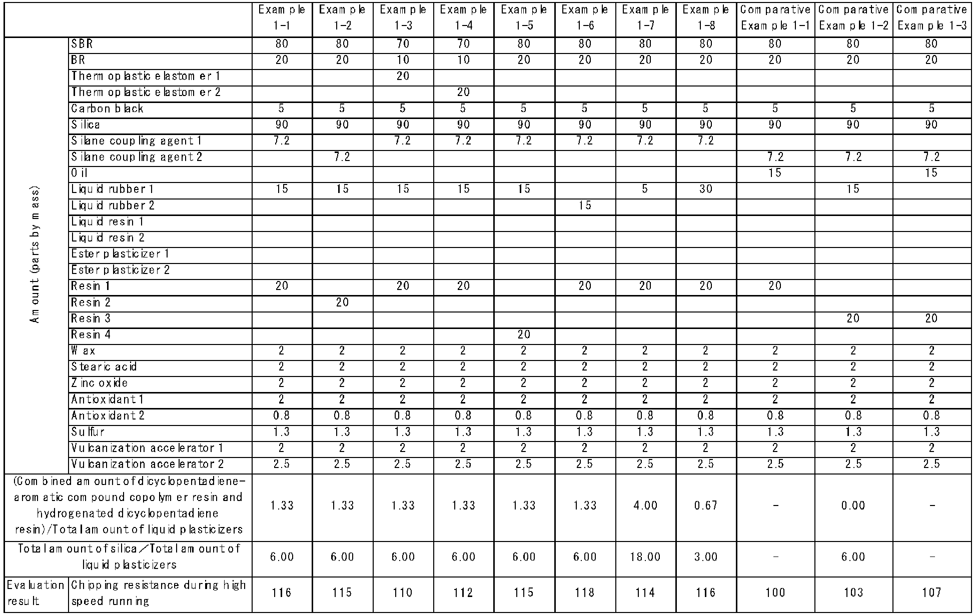

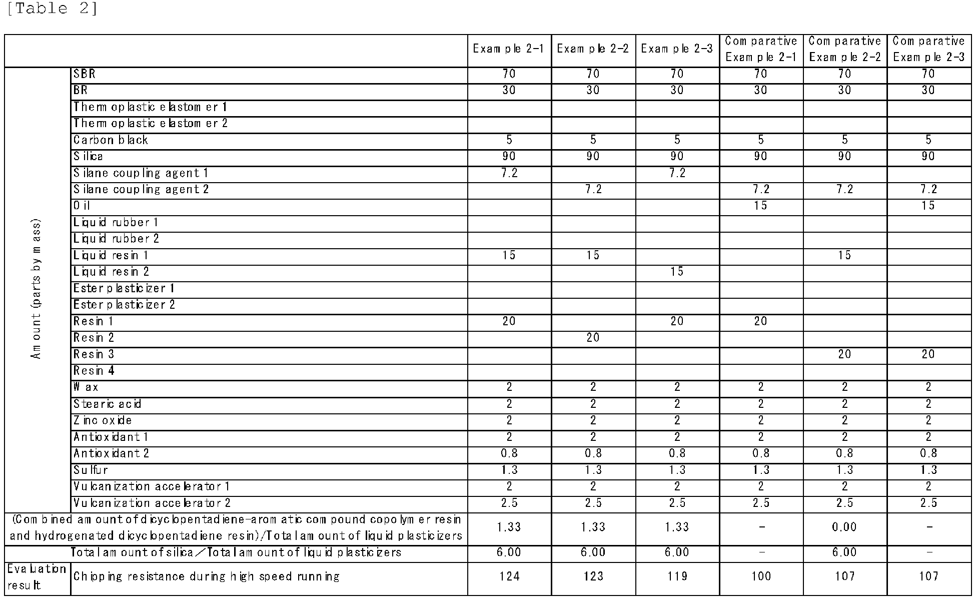

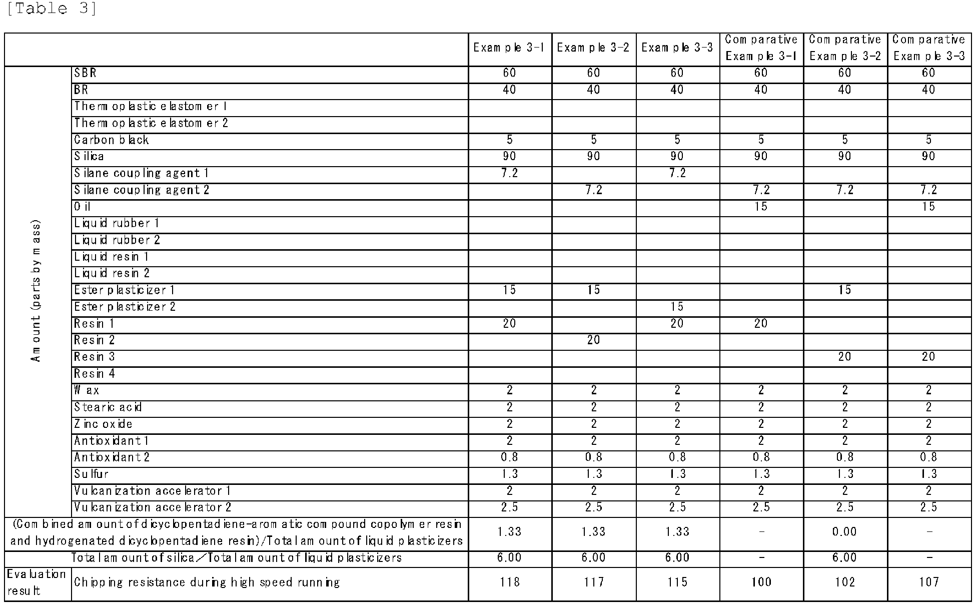

Tables 1 to 3 demonstrate that the examples containing an elastomer component, at least one liquid plasticizer selected from the group consisting of liquid rubbers, liquid resins, and ester plasticizers, and a dicyclopentadiene-aromatic compound copolymer resin and/or a hydrogenated dicyclopentadiene resin exhibited improved chipping resistance during high speed running.

Moreover, a comparison of Example 1-2 and Comparative Examples 1-1 to 1-3, a comparison of Example 2-2 and Comparative Examples 2-1 to 2-3, and a comparison of Example 3-2 and Comparative Examples 3-1 to 3-3 show that the combined use of at least one liquid plasticizer selected from the group consisting of liquid rubbers, liquid resins, and ester plasticizers with a dicyclopentadiene-aromatic compound copolymer resin and/or a hydrogenated dicyclopentadiene resin synergistically improved chipping resistance during high speed running.

The present invention aims to provide tire compositions which provide improved chipping resistance during high speed running, and tires including the compositions. Included is a tire composition containing: an elastomer component; at least one liquid plasticizer selected from the group consisting of liquid rubbers, liquid resins, and ester plasticizers; and a dicyclopentadiene-aromatic compound copolymer resin and/or a hydrogenated dicyclopentadiene resin.

## Claims

1. A tire, comprising a tire component comprising a tire composition, the tire composition comprising:
an elastomer component;
at least one liquid plasticizer selected from the group consisting of liquid rubbers, liquid resins, and ester plasticizers; and
a dicyclopentadiene-aromatic compound copolymer resin and/or a hydrogenated dicyclopentadiene resin,
wherein in the tire composition, a ratio of a combined amount of the dicyclopentadiene-aromatic compound copolymer resin and the hydrogenated dicyclopentadiene resin to a total amount of the at least one liquid plasticizer is 0.67 to 10.

2. The tire according to claim 1,
wherein in the tire composition, a ratio of a combined amount of the dicyclopentadiene-aromatic compound copolymer resin and the hydrogenated dicyclopentadiene resin to a total amount of the at least one liquid plasticizer is 1.1 to 1.5.

3. The tire according to claim 1 or 2,
wherein the tire composition comprises silica.

4. The tire according to any one of claims 1 to 3,
wherein the tire composition comprises 5 to 200 parts by mass of silica per 100 parts by mass of the total elastomer component.

5. The tire according to any one of claims 1 to 4,
wherein the tire composition comprises a mercapto silane coupling agent.

6. The tire according to any one of claims 1 to 5,
wherein in the tire composition, a ratio of a total amount of silica to a total amount of the at least one liquid plasticizer is 1.0 to 30.

7. The tire according to any one of claims 1 to 6,
wherein in the tire composition, a combined amount of the dicyclopentadiene-aromatic compound copolymer resin and the hydrogenated dicyclopentadiene resin is 80 parts by mass or less per 100 parts by mass of the total elastomer component.

8. The tire according to any one of claims 1 to 7,
wherein the tire component is a tread.

9. The tire according to any one of claims 1 to 8,
wherein the tire is a tire for passenger vehicles.

## Patentansprüche

1. Reifen, umfassend eine Reifenkomponente, die eine Reifenmischung umfasst, wobei die Reifenmischung umfasst:
eine Elastomerkomponente;
zumindest einen flüssigen Weichmacher, ausgewählt aus der Gruppe bestehend aus flüssigen Kautschuken, flüssigen Harzen und Esterweichmachern; und
ein Dicyclopentadien-aromatisches Verbindungs-Copolymerharz und/oder ein hydriertes Dicyclopentadienharz,
wobei in der Reifenmischung ein Verhältnis einer Gesamtmenge des Dicyclopentadien-aromatischen Verbindungs-Copolymerharzes und des hydrierten Dicyclopentadienharzes zu einer Gesamtmenge des zumindest einen flüssigen Weichmachers 0,67 bis 10 beträgt.

2. Reifen nach Anspruch 1,
wobei in der Reifenmischung ein Verhältnis einer Gesamtmenge des Dicyclopentadien-aromatischen Verbindungs-Copolymerharzes und des hydrierten Dicyclopentadienharzes zu einer Gesamtmenge des zumindest einen flüssigen Weichmachers 1,1 bis 1,5 beträgt.

3. Reifen nach Anspruch 1 oder 2,
wobei die Reifenmischung Siliciumoxid umfasst.

4. Reifen nach einem der Ansprüche 1 bis 3,
wobei die Reifenmischung 5 bis 200 Masseteile Siliciumoxid pro 100 Masseteile der gesamten Elastomerkomponente umfasst.

5. Reifen nach einem der Ansprüche 1 bis 4,
wobei die Reifenmischung ein Mercapto-Silankupplungsmittel umfasst.

6. Reifen nach einem der Ansprüche 1 bis 5,
wobei in der Reifenmischung ein Verhältnis einer Gesamtmenge an Siliciumoxid zu einer Gesamtmenge des zumindest einen flüssigen Weichmachers 1,0 bis 30 beträgt.

7. Reifen nach einem der Ansprüche 1 bis 6,
wobei in der Reifenmischung eine Gesamtmenge des Dicyclopentadien-aromatischen Verbindungs-Copolymerharzes und des hydrierten Dicyclopentadienharzes 80 Masseteile oder weniger pro 100 Masseteile der gesamten Elastomerkomponente beträgt.

8. Reifen nach einem der Ansprüche 1 bis 7,
wobei die Reifenkomponente eine Lauffläche ist.

9. Reifen nach einem der Ansprüche 1 bis 8,
wobei der Reifen ein Reifen für Personenkraftwagen ist.

## Revendications

1. Pneu, comprenant un composant de pneu comprenant une composition de pneu, la composition de pneu comprenant :
un composant élastomère ;
au moins un plastifiant liquide choisi dans le groupe constitué par des caoutchoucs liquides, des résines liquides et des plastifiants ester ; et
une résine copolymère de composé aromatique dicyclopentadiène et/ou une résine de dicyclopentadiène hydrogénée,
dans lequel, dans la composition de pneu, un rapport entre une quantité combinée de résine copolymère de composé aromatique dicyclopentadiène et de résine de dicyclopentadiène hydrogénée et une quantité totale de l'au moins un plastifiant liquide est de 0,67 à 10.

2. Pneu selon la revendication 1,
dans lequel, dans la composition de pneu, un rapport entre une quantité combinée de résine copolymère de composé aromatique dicyclopentadiène et de résine de dicyclopentadiène hydrogénée et une quantité totale de l'au moins un plastifiant liquide est de 1,1 à 1,5.

3. Pneu selon la revendication 1 ou 2,
dans lequel la composition de pneu comprend de la silice.

4. Pneu selon l'une des revendications 1 à 3,
dans lequel la composition de pneu comprend de 5 à 200 parties en masse de silice pour 100 parties en masse du composant élastomère total.

5. Pneu selon l'une des revendications 1 à 4,
dans lequel la composition de pneu comprend un agent de couplage mercaptosilane.

6. Pneu selon l'une des revendications 1 à 5,
dans lequel, dans la composition de pneu, un rapport entre une quantité totale de silice et une quantité totale de l'au moins un plastifiant liquide est de 1,0 à 30.

7. Pneu selon l'une des revendications 1 à 6,
dans lequel, dans la composition de pneu, une quantité combinée de résine copolymère de composé aromatique dicyclopentadiène et de résine de dicyclopentadiène hydrogénée est de 80 parties en masse ou moins pour 100 parties en masse du composant élastomère total.

8. Pneu selon l'une des revendications 1 à 7,
dans lequel le composant de pneu est une bande de roulement.

9. Pneu selon l'une des revendications 1 à 8,
dans lequel le pneu est un pneu pour des véhicules à passager.
